(19) Europäisches Patentamt / European Patent Office / Office européen des brevets

(11) **EP 1 879 005 B1**

(12) **EUROPÄISCHE PATENTSCHRIFT**

(45) Veröffentlichungstag und Bekanntmachung des Hinweises auf die Patenterteilung:
**25.08.2010  Patentblatt 2010/34**

(51) Int Cl.:
***G01K 15/00*** *(2006.01)*

(21) Anmeldenummer: **07033505.4**

(22) Anmeldetag: **06.07.2007**

(54) **Verfahren zur Überprüfung eines Temperatursensors mit mindestens zwei temperatursensitiven Widerständen**

Method for testing a temperature sensor with at least two temperature-sensitive resistances

Procédé destiné à la vérification d'un capteur de température doté d'au moins deux résistances sensibles à la température

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.07.2006  DE 102006032169**
**18.12.2006  AT 20802006**

(43) Veröffentlichungstag der Anmeldung:
**16.01.2008  Patentblatt 2008/03**

(73) Patentinhaber: **Vaillant GmbH**
**42859 Remscheid (DE)**

(72) Erfinder:
• **Lehminger, Stefan**
**51067 Köln (DE)**
• **Tomczak, Heinz-Jörg**
**42855 Remscheid (DE)**

(74) Vertreter: **Hocker, Thomas**
**Vaillant GmbH**
**Berghauser Strasse 40**
**42859 Remscheid (DE)**

(56) Entgegenhaltungen:
EP-A- 1 413 862       DE-A1-102004 035 014
JP-A- 2005 009 924    US-A- 6 161 958

**Beschreibung**

Die Erfindung bezieht sich auf ein Verfahren zur Überprüfung eines Temperatursensors mit mindestens zwei temperatursensitiven Widerständen. Deren elektrischer Widerstand R stellt sich in Abhängigkeit des Referenzwiderstandes $R_0$ bei Referenztemperatur $T_0$, der Temperatur T und des widerstandsspezifischen Temperaturkoeffizienten $\alpha$ ein.

$$R(T) = R_0\big(1 + \alpha(T - T_0)\big)$$

Bei Temperatursensoren mit temperatursensitiven Widerständen werden diese in Reihe mit Vorwiderständen geschaltet. Der Spannungsabfall am temperatursensitiven Widerstand oder Vorwiderstand ist proportional zur Temperatur des Sensors.

Bei sicherheitsrelevanten Bauteilen, welche mittels Temperatursensoren überwacht werden, muss sichergestellt sein, dass ein Defekt erkannt wird. Aus diesem Grund werden häufig zwei temperatursensitive Widerstände in die Sensoren integriert. Hierdurch können die Werte miteinander verglichen werden.

JP 2005 009924 A offenbart einen Temperatursensor mit einem temperatursensitiven Widerstand, bei dem zur Überprüfung des Sensors dieser in vorgegebener Weise verschaltet wird, um das Sensorsignal dann auszuwerten.

US-A-6 161 958 offenbart eine Vorrichtung und ein Verfahren zur Überprüfung eines temperatursensitiven Widerstands, indem der temperatursensitive Widerstand ohne Vorwiderstand bestromt wird und während des Tests seine Temperatur und seine Leistungsaufnahme gemessen und mit Referenzwerten verglichen wird.

DE 10 2004 035014 A1 offenbart einen Temperatursensor mit zwei temperatursensitiven Widerständen mit unterschiedlichen Kennlinien, deren Vergleich zum Erkennen eines Defektes dient. Aus EP 1 413 862 A1 ist eine Temperaturerfassungseinrichtung mit zwei temperatursensitiven Widerständen an einer Spannungsquelle bekannt. Diesen beiden temperatursensitiven Widerständen sind Konstantwiderstände mit unterschiedlichen Widerstandswerten vorgeschaltet, so dass bei gleicher Temperatur unterschiedliche Spannungen an den beiden temperatursensitiven Widerständen anliegen.

Temperatursensitive Widerstände unterliegen einer Drift, so dass sich sowohl der Referenzwiderstand $R_0$, als auch der widerstandsspezifische Temperaturkoeffizient $\alpha$ verändern können. So könnte im Fall einer Drift der Zustand eintreten, dass trotz Drift des Referenzwiderstands $R_0$ und des widerstandsspezifischen Temperaturkoeffizienten $\alpha$ bei einer Temperatur mittels der beiden unterschiedlichen temperatursensitiven Widerstände gleiche Temperaturen gemessen würden, da die beiden Drifts sich in diesem Punkt ausgleichen.

Der Erfindung liegt daher die Aufgabe zugrunde, bei einem Temperatursensor mit mindestens zwei temperatursensitiven Widerständen ein Verfahren zur Überprüfung des Sensors zu entwickeln, welcher über einen weiten Temperaturbereich eine Überprüfung erlaubt.

Die Aufgabe wird durch ein Verfahren zur Überprüfung eines Temperatursensors mit mindestens zwei temperatursensitiven Widerständen gemäß den Merkmalen des unabhängigen Anspruchs 1 dadurch gelöst, dass ein temperatursensitiver Widerstand mit einem niederohmigen Vorwiderstand verbunden wird, wodurch sich der temperatursensitive Widerstand aufheizt. Der mindestens eine andere temperatursensitive Widerstand ist derweil mit einem hochohmigen Vorwiderstand verbunden. Die Temperatur der mindestens beiden temperatursensitiven Widerstände kann gemessen und verglichen werden. Weichen die beiden Temperaturen wesentlich voneinander ab, so wird ein Fehlersignal ausgegeben.

Gemäß den Merkmalen des abhängigen Anspruchs 2 kann nur ein temperatursensitiver Widerstand mit niederohmigem Vorwiderstand an zwei unterschiedliche Spannungen angeschlossen werden, wodurch sich ebenfalls unterschiedliche Temperaturen einstellen.

Alternativ wird gemäß den Merkmalen des abhängigen Anspruchs 3 in einem weiteren Verfahrensschritt der temperatursensitive Widerstand, der im ersten Verfahrensschritt mit einem niederohmigen Vorwiderstand verbunden war, mit einem hochohmigen Vorwiderstand verbunden, während mindestens ein temperatursensitive Widerstand, der im ersten Verfahrensschritt mit einem hochohmigen Vorwiderstand verbunden war, in diesem Schritt mit einem niederohmigen Vorwiderstand verbunden wird. Die Temperatur der mindestens beiden temperatursensitiven Widerstände kann dann ebenfalls gemessen und verglichen werden. Gemäß den Merkmalen des Anspruchs 4 können die beiden Verfahrensschritte bei unterschiedlichen Spannungen durchgeführt werden.

Das Verfahren kann mit zwei oder mehreren temperatursensitiven Widerstandselementen durchgeführt werden. Sind mehr als zwei temperatursensitive Widerstandselemente vorhanden, so werden jeweils zwei Elemente auf die beschriebene Art verglichen. Sind mindestens 3 temperatursensitive Widerstandselemente vorhanden, so kann in dem Fall, dass ein Widerstandselement eine andere Temperatur anzeigt als die anderen, welche identische Temperaturen messen, daraus geschlussfolgert werden, dass das abweichende Widerstandelement defekt ist. Gemäß den Merkmalen des abhängigen Anspruchs 6 kann dann der Sensor ohne das defekte Widerstandselement betrieben werden.

Eine weitere Aufgabe der Erfindung besteht darin zu überprüfen, ob ein eingebauter Sensor zur Messung einer Festkörpertemperatur mit allen temperatursensitiven Widerständen am Messkörper anliegt.

Diese Aufgabe wird gemäß den Merkmalen des abhängigen Anspruchs 7 dadurch gelöst, dass der Sensor mit einer definierten Leistung beheizt wird. Liegt der Sensor nicht an, so erhitzt er sich stärker als im anliegenden Fall, da dann mit vorbenannter Leistung auch der Festkörper beheizt wird.

Die Erfindung wird nun anhand der Figuren näher erläutert. Hierbei zeigen

Figur 1 die Messschaltung im normalen Temperaturmessmodus,

Figur 2 die Messschaltung während eines ersten Verfahrensschritts und

Figur 3 die Messschaltung während eines anderen Verfahrensschritts.

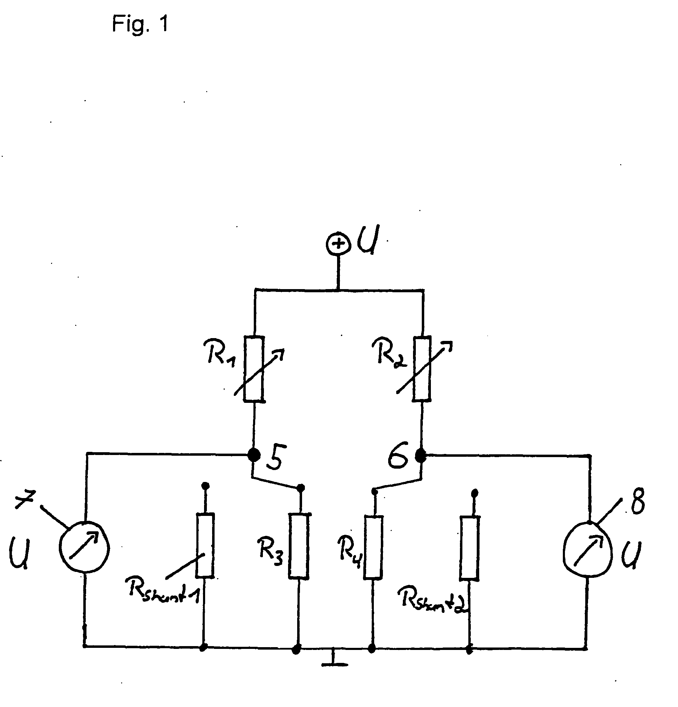

Figur 1 zeigt die Grundschaltung des erfindungsgemäßen Temperatursensors mit zwei temperatursensitiven Widerständen R1 und R2. Diese verfügen über einen positiven Temperaturkoeffizienten PTC, könnten jedoch prinzipiell auch über einen negativen Temperaturkoeffizienten NTC verfügen. Die beiden temperatursensitiven Widerständen R1 und R2 sind jeweils seriell über Schaltvorrichtung 5, 6 entweder mit einem hochohmigen Vorwiderstand R3, R4 oder mit einem niederohmigen Vorwiderstand $R_{Shunt1}$, $R_{Shunt2}$ verbunden. Bei der Verbindung mit einem niederohmigen Vorwiderstand erhitzt sich ein temperatursensitiver Widerstand. Die beiden temperatursensitiven Widerstände R1 und R2 sind derartig nah beieinander angeordnet, dass die Erhitzung eines Widerstandes zur Erwärmung des anderen Widerstandes führt. Die zwei Widerstandsserienschaltungen (R1-R3 beziehungsweise R1-$R_{Shunt1}$ und R2-R4 beziehungsweise R2-$R_{Shunt2}$) sind an dieselbe Gesamtspannung U angeschlossen. Je nach Stellung der Schaltvorrichtung 5 wird mittels einer Vorrichtung zur Spannungsmessung 7 der Spannungsabfall an dem hochohmigen Vorwiderstand R3 oder dem niederohmigen Vorwiderstand $R_{Shunt1}$ gemessen. Je nach Stellung der Schaltvorrichtung 6 wird mittels einer Vorrichtung zur Spannungsmessung 8 der Spannungsabfall an dem hochohmigen Vorwiderstand R4 oder dem niederohmigen Vorwiderstand $R_{Shunt2}$ gemessen. Bei der Verschaltung gemäß Figur 1 wird der Spannungsabfall an den hochohmigen Vorwiderständen R3 und R4 gemessen. Durch die Reihenschaltung der temperatursensitiven Widerstände R1 und R2 mit den hochohmigen Vorwiderständen R3 und R4 werden die Elemente von einem kleinen elektrischen Strom I durchflossen, so dass die Elemente sich durch die elektrische Leistung P kaum aufheizen.

Es ist vorteilhaft, wenn die Widerstände R3 und R4 unterschiedliche Widerstandswerte aufweisen, da dann eindeutig deren Signale unterschieden werden können.

Es gilt:

$$U = U_1 + U_3 = R1(T) \cdot I + R3 \cdot I = (R1(T) + R3) \cdot I$$

wobei $U_1$ der Spannungsabfall am temperatursensitiven Widerstand R1 und $U_3$ der Spannungsabfall am Vorwiderstand R3 ist. Der Spannungsabfall $U_3$ wird gemessen und hieraus der Strom I bestimmt.

$$U_3 = R3 \cdot I$$

$$I = \frac{U_3}{R3}$$

Des Weiteren gilt:

$$U_1 = U - U_3 = R1(T) \cdot I$$

EP 1 879 005 B1

$$R1(T) = \frac{U - U_3}{I} = R_0\big(1 + \alpha(T - T_0)\big)$$

Hierbei ist $R_0$ der Referenzwiderstand bei der Ausgangstemperatur $T_0$. Aus obiger Formel lässt sich die Temperatur des temperatursensitiven Widerstands R1 errechnen.

Analog hierzu lässt sich die Temperatur des temperatursensitiven Widerstands R2 bestimmen.

Erfindungsgemäß kann bei zwei unterschiedlichen Temperaturen überprüft werden, ob die beiden temperatursensitiven Widerstände R1 und R2 im Rahmen der zulässigen Toleranz gleiche Messwerte liefern. Hierzu gibt es zwei Varianten:

1. Variante

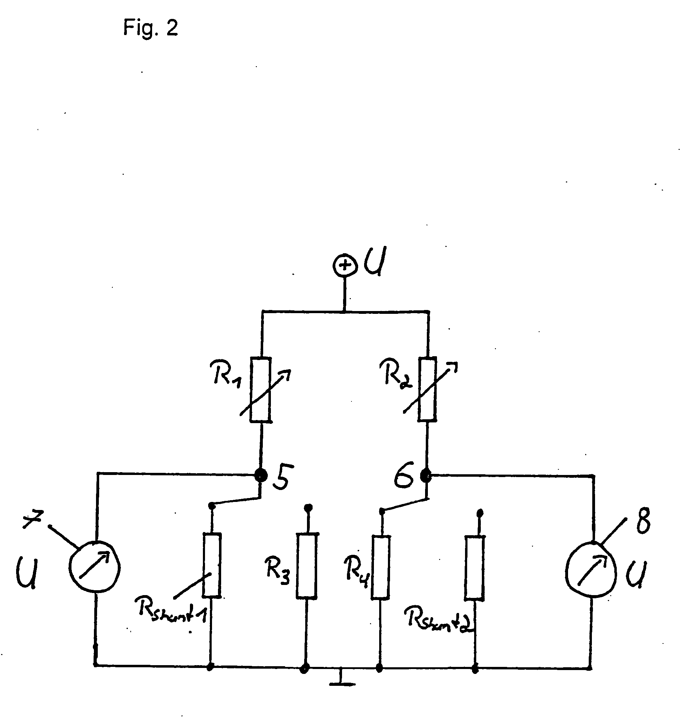

Der Schalter 5 wird gemäß Figur 2 umgeschaltet, so dass der temperatursensitive Widerstand R1 mit dem niederohmigen Vorwiderstand $R_{Shunt1}$ verbunden wird. Dieser niederohmige Vorwiderstand $R_{Shunt1}$ bewirkt einen wesentlich höheren Strom $I_1$ durch die Elemente R1 und $R_{Shunt1}$ als zuvor.

$$U_{Shunt1} = R_{Shunt1} \cdot I_1$$

$$I_1 = \frac{U_{Shunt1}}{R_{Shunt1}}$$

Dieser Strom $I_1$ bewirkt in Verbindung mit dem Widerstand des temperatursensitiven Widerstands R1 eine Erhitzung desselben aufgrund der verbrauchten elektrischen Leistung $P_1$.

$$P_1 = U_1 \cdot I_1 = R1(T) \cdot I^2$$

Es stellt sich ein Gleichgewichtszustand ein, in dem gilt:

$$R1(T) = \frac{U - U_{Shunt1}}{I_1} = R_0\big(1 + \alpha(T - T_0)\big)$$

Hieraus lässt sich die Temperatur $T_{R1,1}$ des ersten temperatursensitiven Widerstands R1 bestimmen.

$$T_{R1,1} = T_0 + \frac{\dfrac{R1(T)}{R_0} - 1}{\alpha}$$

Hierbei kann in einer Ausgestaltung der Erfindung die Spannung U variiert werden, bis eine bestimmte Temperatur sich an dem ersten temperatursensitiven Widerstand R1 einstellt.

Die Reihenschaltung des zweiten temperatursensitiven Widerstands R2 mit dem hochohmigen Vorwiderstand R4 liegt an derselben Gesamtspannung U an. Aufgrund des hohen Widerstandes des Widerstands R4 stellt sich ein kleiner Strom $I_2$ ein. Dieser bewirkt lediglich eine minimale Heizung des zweiten temperatursensitiven Widerstands R2. Es gilt:

4

$$U_4 = R4 \cdot I_2$$

$$I_2 = \frac{U_4}{R4}$$

$$R2(T) = \frac{U - U_4}{I_2} = R_0\left(1 + \alpha\left(T - T_0\right)\right)$$

Hieraus lässt sich analog zu $T_{R1,1}$ die Temperatur $T_{R2,1}$ des zweiten temperatursensitiven Widerstands R2 bestimmen. Aus den beiden Temperaturen $T_{R1,1}$ und $T_{R2,1}$ wird eine Temperaturdifferenz $\Delta T_1$ ermittelt.

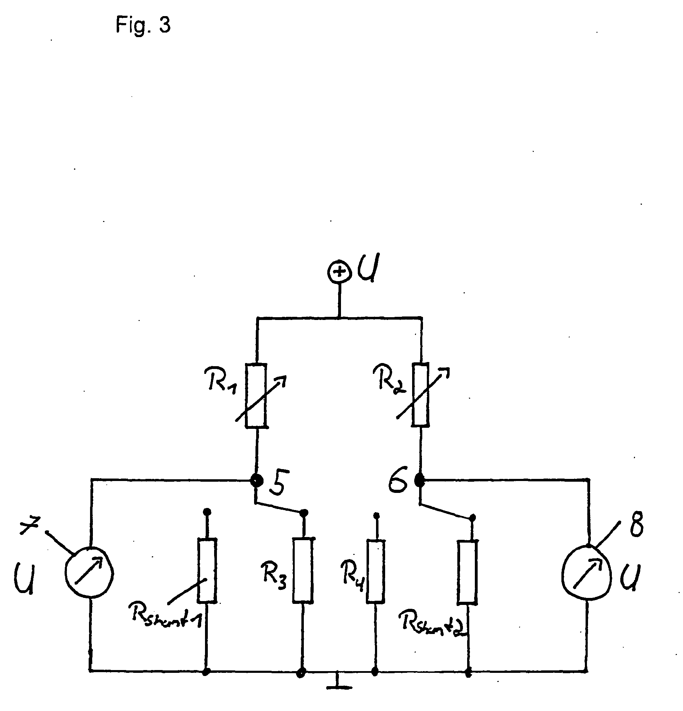

Nun werden gemäß Figur 3 die beiden Schaltvorrichtungen 5 und 6 umgeschaltet, wodurch der erste temperatursensitive Widerstands R1 seriell mit dem hochohmigen Vorwiderstand R3 und der zweite temperatursensitive Widerstands R2 seriell mit dem niederohmigen Vorwiderstand $R_{Shunt2}$ verbunden ist.

Ausgehend von zwei identischen temperatursensitiven Widerständen R1 und R2 sollten die niederohmigen Vorwiderstände $R_{Shunt1}$ und $R_{Shunt2}$ unterschiedliche elektrische Widerstände aufweisen, um bei unveränderter Spannung U unterschiedliche Aufheiztemperaturen zu bewirken. Weisen die niederohmigen Vorwiderstand $R_{Shunt1}$ und $R_{Shunt2}$ gleiche elektrische Widerstände auf, so muss die Spannung U verändert werden; so kann die Spannung U beispielsweise solange verändert werden, bis sich am zweiten temperatursensitiven Widerstand R2 eine definierte Temperatur einstellt, welche sich von der Temperatur des vorangegangenen Verfahrensschritt deutlich unterscheidet.

Nun gilt:

$$U_{Shunt2} = R_{Shunt2} \cdot I_2$$

$$I_2 = \frac{U_{Shunt2}}{R_{Shunt2}}$$

$$R2(T) = \frac{U - U_{Shunt2}}{I_2} = R_0\left(1 + \alpha\left(T - T_0\right)\right)$$

Hieraus wird die Temperatur $T_{R2,2}$ des zweiten temperatursensitiven Widerstands R2 bestimmt. Zugleich liegt die Reihenschaltung des zweiten temperatursensitiven Widerstands R1 mit dem hochohmigen Vorwiderstand R3 an derselben Gesamtspannung U an. Es gilt:

$$U_3 = R3 \cdot I_1$$

$$I_1 = \frac{U_3}{R3}$$

$$R1(T) = \frac{U - U_3}{I_1} = R_0\left(1 + \alpha\left(T - T_0\right)\right)$$

Hieraus lässt sich die Temperatur $T_{R1,2}$ des ersten temperatursensitiven Widerstands R1 bestimmen. Aus den beiden Temperaturen $T_{R1,2}$ und $T_{R2,2}$ wird eine Temperaturdifferenz $\Delta T_2$ ermittelt.

Überschreitet eine der beiden Temperaturdifferenzen $\Delta T_1$ und $\Delta T_2$ einen vorgegeben Wert $\Delta T$, so wird ein

Fehlersignal ausgegeben, da beide Sensoren nicht akzeptabel übereinstimmende Kennlinien besitzen.

Alternativ kann - anstelle der Verbindung des zweiten temperatursensitiven Widerstands R2 mit einem niederohmigen Vorwiderstand im zweiten Verfahrensschritt - der erste temperatursensitive Widerstand R1 über die Schaltvorrichtung 5 mit einem zweiten niederohmigen Vorwiderstand, dessen elektrischer Widerstand sich vom ersten unterscheidet, verbunden werden.

2. Variante

Wie bei der ersten Variante wird zunächst der Schalter 5 gemäß Figur 2 umgeschaltet, so dass der temperatursensitive Widerstand R1 mit dem niederohmigen Vorwiderstand $R_{Shunt1}$ verbunden wird, während der andere temperatursensitive Widerstand R2 mit dem hochohmigen Vorwiderstand R4 seriell verbunden bleibt. Auf den niederohmigen Vorwiderstand $R_{Shunt2}$ kann hierbei verzichtet werden. Es wird nun eine erste Messung, wie zuvor beschrieben, bei einer ersten vorgegebenen Spannung U1 durchgeführt. Es gilt:

$$I_1 = \frac{U_{Shunt1}}{R_{Shunt1}}$$

$$R1(T) = \frac{U1 - U_{Shunt1}}{I_1} = R_0\left(1 + \alpha\left(T - T_0\right)\right)$$

$$I_2 = \frac{U_4}{R4}$$

$$R2(T) = \frac{U1 - U_4}{I_2} = R_0\left(1 + \alpha\left(T - T_0\right)\right)$$

Hieraus lassen sich die Temperatur $T_{R1,1}$ und $T_{R2,1}$ der zwei temperatursensitiven Widerstände R1 und R2 sowie deren Temperaturdifferenz $\Delta T_1$ bei der ersten Spannung U1 bestimmen.

Nun wird bei gleich bleibender Schaltung die Spannung verändert und eine zweite vorgegebene Spannung U2 eingestellt. Nun gilt:

$$I_1 = \frac{U_{Shunt1}}{R_{Shunt1}}$$

$$R1(T) = \frac{U2 - U_{Shunt1}}{I_1} = R_0\left(1 + \alpha\left(T - T_0\right)\right)$$

$$I_2 = \frac{U_4}{R4}$$

$$R2(T) = \frac{U2 - U_4}{I_2} = R_0\left(1 + \alpha\left(T - T_0\right)\right)$$

Hieraus werden die Temperatur $T_{R1,2}$ und $T_{R2,2}$ der zwei temperatursensitiven Widerstände R1 und R2 sowie

deren Temperaturdifferenz $\Delta T_2$ bei der ersten Spannung U2 bestimmt.

Überschreitet eine der beiden Temperaturdifferenzen $\Delta T_1$ und $\Delta T_2$ einen vorgegeben Wert $\Delta T$, so wird ein Fehlersignal ausgegeben, da die Kennlinien der beiden Sensoren nicht ausreichend übereinstimmen.

In einer optionalen Ausgestaltung der Erfindung können die einzelnen Widerstandsserienschaltungen anstelle an dieselbe Spannung jeweils derartig an eine Spannungsquelle angeschlossen werden, dass sich jeweils derselbe Strom einstellt; hierzu wird die Spannung solange variiert, bis der Strom dem Sollstrom entspricht. Es stellt sich dann jeweils eine bestimmte Spannung an den Widerständen der Schaltung ein. Hieraus lässt sich die Temperatur der temperatursensitiven Widerstände bestimmen.

Wird der zuvor beschriebene Sensor zur Erfassung einer Festkörpertemperatur eingesetzt, so kann erfindungsgemäß das Anliegen des Sensors überprüft werden.

Nach dem Einbau an einer mutmaßlich am Festkörper anliegenden Stelle wird der Sensor gemäß Figur 1 mit einer vorgegebenen Leistung bestromt. Hierzu kann die Spannung variiert werden, bis sich diese vorgegebene Leistung (P = U * I) einstellt. Nun wird mittels Spannungsmessung am Vorwiderstand R4 die Temperatur T des temperatursensitiven Widerstands R2 erfasst. Diese Temperatur T wird entweder mit einer vorgegebenen Temperatur T* für die Solltemperatur bei anliegendem Sensor oder einer vorgegebenen Temperatur T** für die Solltemperatur bei nicht anliegendem Sensor verglichen. Liegt der Sensor an, so wird mittels der vorgegebenen Leistung nicht nur der Sensor, sondern auch das Umfeld der Anliegefläche am Festkörper erhitzt; demnach ist die Temperatur geringer als im Fall des Nichtanliegens. Stellt sich heraus, dass demnach der Sensor nicht anliegt, so wird ein Fehlersignal ausgegeben.

**Patentansprüche**

1. Verfahren zur Überprüfung eines Temperatursensors mit mindestens zwei temperatursensitiven Widerständen (R1, R2), welche über einen negativen oder positiven Koeffizienten verfügen (PTC, NTC) und sich in engem thermischen Kontakt befinden, wobei jedem der mindestens zwei temperatursensitiven Widerständen (R1, R2) jeweils mindestens ein elektrischer Vorwiderstand (R3, R4, $R_{Shunt1}$, $R_{Shunt2}$) seriell vorgeschaltet ist, wobei die mindestens zwei Widerstandsserienschaltungen (R1-R3, R2-R4, R1-$R_{Shunt1}$, R2-$R_{Shunt2}$) an die selbe Spannung (U) angeschlossen oder jeweils durch den gleichen Strom (I) beaufschlagt werden, **dadurch gekennzeichnet, dass** der erste temperatursensitive Widerstand (R1) über eine Schaltvorrichtung (5) entweder mit einem hochohmigen Vorwiderstand (R3) oder mit einem niederohmigen Vorwiderstand ($R_{Shunt1}$) verbindbar ist,
   der erste temperatursensitive Widerstand (R1) über die ihm zugeordnete Schaltvorrichtung (5) mit dem niederohmigen Vorwiderstand ($R_{Shunt1}$) verbunden wird, während der oder die anderen temperatursensitive Widerstände (R2) mit den zugeordneten hochohmigen Vorwiderständen R4 seriell verbunden bleiben,
   bei einer ersten Spannung U1 oder einem ersten Strom 11 der Spannungsabfall an den mindestens zwei temperatursensitiven Widerständen (R1, R2) oder ihren Vorwiderständen ($R_{Shunt1}$, R4) ermittelt und hieraus die Temperaturen ($T_{R1,U1}$, $T_{R2,U1}$, $T_{R1,1}$, $T_{R2,1}$) der Widerstände (R1, R2) sowie deren Differenz $\Delta T_1$, $\Delta T_{U1}$ ermittelt werden, und in dem Fall, in dem mindestens die Temperaturdifferenz $\Delta T_1$, $\Delta T_{U1}$ einen vorgegebenen Betrag $\Delta T$ übersteigt, ein Fehlersignal ausgegeben wird.

2. Verfahren zur Überprüfung eines Temperatursensors gemäß Anspruch 1, **dadurch gekennzeichnet, dass** anschließend bei einer zweiten Spannung U2, welche sich von der ersten Spannung U1 unterscheidet, oder einem zweiten Strom 12, der sich vom ersten Strom I1 unterscheidet, der Spannungsabfall an den beiden temperatursensitiven Widerständen (R1, R2) oder ihren Vorwiderständen ($R_{Shut1}$, R4) ermittelt und hieraus die Temperaturen $T_{R1,U2}$, $T_{R2,U2}$ der temperatursensitiven Widerstände (R1, R2) sowie deren Differenz $\Delta T_{U2}$ ermittelt werden,
   und in dem Fall, in dem mindestens eine der Temperaturdifferenzen $\Delta T_{U1}$, $\Delta T_{U2}$ einen vorgegebenen Betrag $\Delta T$ übersteigt, ein Fehlersignal ausgegeben wird.

3. Verfahren zur Überprüfung eines Temperatursensors gemäß Anspruch 1, wobei mindestens zwei temperatursensitive Widerstände (R1, R2) über eine Schaltvorrichtung (5, 6) entweder mit einem hochohmigen Vorwiderstand (R3, R4) oder mit einem niederohmigen Vorwiderstand ($R_{Shunt1}$, $R_{Shunt2}$) verbindbar sind, **dadurch gekennzeichnet, dass** anschließend der erste temperatursensitive Widerstand (R1) über die ihm zugeordnete Schaltvorrichtung (5) von dem niederohmigen Vorwiderstand ($R_{Shunt1}$) getrennt und mit dem ihm zugeordneten Vorwiderstand (R3) verbunden wird, während ein anderer temperatursensitiver Widerstand (R2) über die ihm zugeordnete Schaltvorrichtung (6) mit dem ihm zugeordneten niederohmigen Vorwiderstand ($R_{Shunt2}$) verbunden wird,
   der Spannungsabfall an den mindestens zwei temperatursensitiven Widerständen (R1, R2) oder ihren Vorwiderständen (R3, $R_{Shunt2}$) ermittelt und hieraus die Temperaturen ($T_{R1,2}$, $T_{R2,2}$) der Widerstände (R1, R2) sowie deren Differenz $\Delta T_2$ ermittelt werden, und in dem Fall, in dem mindestens eine der Temperaturdifferenzen $\Delta T_1$, $\Delta T_2$ einen vorgegebenen Betrag $\Delta T$ übersteigt, ein Fehlersignal ausgegeben wird.

**4.** Verfahren zur Überprüfung eines Temperatursensors gemäß Anspruch 3, **dadurch gekennzeichnet, dass** die Messung der Temperaturdifferenzen ($\Delta T_1$, $\Delta T_2$) bei unterschiedlichen Spannungen (U1, U2) erfolgt.

**5.** Verfahren zur Überprüfung eines Temperatursensors gemäß Anspruch 3 oder 4, **dadurch gekennzeichnet, dass** die niederohmigen Vorwiderstände ($R_{Shunt1}$, $R_{Shunt2}$) unterschiedliche elektrische Widerstände aufweisen und / oder die hochohmigen Vorwiderstände (R3, R4) unterschiedliche elektrische Widerstände aufweisen und / oder die temperatursensitiven Widerstände (R1, R2) unterschiedliche elektrische Widerstände aufweisen,

**6.** Verfahren zur Überprüfung eines Temperatursensors nach einem der Ansprüche 1 bis 5, **dadurch gekennzeichnet, dass** mindestens drei temperatursensitiven Widerständen mit seriell vorgeschalteten Vorwiderständen Verwendung finden und in dem Fall, dass bei den Messungen mindestens zwei temperatursensitiven Widerständen übereinstimmende Temperaturen liefern, während mindestens ein temperatursensitiver Widerstand eine Temperatur liefert, dass mit keinem anderen temperatursensitiven Widerstand übereinstimmt, das Messsignal des abweichenden temperatursensitiven Widerstandes ignoriert wird und der Temperatursensor nur mit den übereinstimmenden temperatursensitiven Widerständen betrieben wird.

**7.** Verfahren zur Überprüfung eines Temperatursensors nach einem der Ansprüche 1 bis 6, **dadurch gekennzeichnet, dass** zur Überprüfung des Anliegens des Temperatursensors ein temperatursensitiver Widerstand (R1) über die ihm zugeordnete Schaltvorrichtung (5) mit dem niederohmigen Vorwiderstand ($R_{Shunt1}$) verbunden wird,
der Spannungsabfall an den mindestens einen Widerstand (R1, R2) oder seines Vorwiderstands (R3, R4, $R_{Shunt1}$, $R_{Shunt2}$) ermittelt und hieraus eine Temperatur T ermittelt wird,
die ermittelte Temperatur mit einer vorgegebenen Temperatur T* für die Solltemperatur bei anliegendem Sensor oder einer vorgegebenen Temperatur T** für die Solltemperatur bei nicht anliegendem Sensor verglichen wird,
und in dem Fall, in dem bei Erwartung der vorgegebenen Temperatur T* für die Solltemperatur bei anliegendem Sensor diese im Rahmen einer Toleranz nicht erreicht wird oder
in dem Fall, in dem bei Erwartung der vorgegebenen Temperatur T** für die Solltemperatur bei nicht anliegendem Sensor diese im Rahmen einer Toleranz erreicht wird
ein Fehlersignal ausgegeben wird.

**Claims**

**1.** A method for testing a temperature sensor with at least two temperature sensitive resistors (R1, R2) having a negative or positive coefficient (PTC, NTC) and being disposed in close thermal contact, with each of the at least two two temperature sensitive resistors (R1, R2) being preceded by at least one electrical series resistor (R3, R4, $R_{shunt1}$, $R_{shunt2}$), with the at least two series resistor circuits (R1-R3, R2-R4, R1-$R_{shunt1}$, R2-$R_{shunt2}$) being connected to the same voltage (U) or fed with the same current (I), **characterised in that** the first temperature sensitive resistor (R1) is connectable via a switching device (5) either to a high resistance series resistor (R3) or a low resistance series resistor ($R_{shunt1}$),
that the said first temperature sensitive resistor (R1) is connected via the associated switching device (5) to the low resistance series resistor ($R_{shunt1}$), while the other one or several temperature sensitive resistors (R2) remain serially connected to the associated high resistance series resistors R4,
that at a first voltage U1 or a first current I1 the voltage drop at the at least two temperature sensitive resistors (R1, R2) or their series resistors ($R_{shunt1}$, R4) is measured and from such measurements the temperatures ($R_{R1,U1}$, $T_{R2,U1}$, $T_{R1,1}$, $T_{R2,1}$) of the resistors (R1, R2) as well as their differences $\Delta T_1$, $\Delta T_{U1}$ are determined,
and in the event that at least the temperature difference $\Delta T_1$, $\Delta T_{U1}$ exceeds a predetermined value $\Delta T$. an error signal is output.

**2.** A method for testing a temperature sensor in accordance with Claim 1, **characterised in that** subsequently at a second voltage U2, which is different from the first voltage U1, or a second current I2, which is different from the first current I1, the voltage drop at the two temperature sensitive resistors (R1, R2) or their series resistors ($R_{shunt1}$, R4) is measured and from such measurements the temperatures ($T_{R1,U2}$, $T_{R2,U2}$) of the temperature sensitive resistor resistors (R1, R2) as well as their difference $\Delta T_{U2}$ is determined,
and in the event that at least the temperature difference $\Delta T_{U1}$, $\Delta T_{U2}$ exceeds a predtermined value $\Delta T$, an error signal is output.

**3.** A method for testing a temperature sensor in accordance with Claim 1, with at least two temperature sensitive resistors (R1, R2) being connectable via a switching device (5, 6) to either a high resistance series resistor (R3, R4) or a low resistance series resistor ($R_{sunt1}$, $R_{shunt2}$), **characterised in that** subsequently the first temperature sensitive resistor (R1) is separated via the associated switching device (5) from the low resistance series resistor ($R_{shunt1}$) and connected to the associated series resistor (R3), while another temperature sensitive resistor (R2) is connected via the associated switching device (6) to the associated low resistance series resistor ($R_{shunt2}$),

that the voltage drop at the at least two temperature sensitive resistors (R1, R2) or their series resistors (R3, $R_{shunt2}$) is measured and from such measurements the temperatures ($T_{R1,2}$, $T_{R2,2}$) of the resistors (R1, R2) as well as their difference $\Delta T_2$ are determined, and in the event that at least one of the the temperature differences $\Delta T_1$, $\Delta T_2$ exceeds a predetermined value $\Delta T$, an error signal is output.

4. A method for testing a temperature sensor in accordance with Claim 1, **characterised in that** the measurements of the temperature differences ($\Delta T_1$, $\Delta T_2$) are effected at different voltages (U1, U2).

5. A method for testing a temperature sensor in accordance with Claims 3 or 4, **characterised in that** the low resistance series resistors ($R_{shunt1}$, $R_{shunt2}$) exhibit different electrical resistance values and/or the high resistance series resistors (R3, R4) exhibit different electrical resistance values and/or the temperature sensitive resistors (R1, R2) exhibit different electrical resistance values.

6. A method for testing a temperature sensor in accordance with any of the Claims 1 to 5, **characterised in that** at least three temperature sensitive resistors preceded by series resistors are used and in the event that the measurements show identical temperatures of at least two temperature sensitive resistors, while at least one temperature sensitive resistor exhibits a temperature that fails to correspond to that of any of the other temperature sensitive resistors, the measured signal of the deviating temperature sensitive resistor is ignored and the temperature sensor is only operated using the corresponding temperature sensitive resistors.

7. A method for testing a temperature sensor in accordance with any of the Claims 1 to 6, **characterised in that** for the purpose of checking the temperature sensitive resistor for proper contact
a temperature sensitive resistor (R1) is connected via the associated switching device (5) to the low resistance series resistor ($R_{shunt1}$),
that the voltage drop at the at least one resistor (R1, R2) or its series resistor (R3, R4, $R_{shunt1}$, $R_{shunt2}$) is measured and from such measurement a temperature T is determined, that the temperature thus measured is compared with a predetermined temperature T* for the setpoint temperature of the sensor being in proper contact, or with a predetermined temperature T** for the setpoint temperature of the sensor not being in proper contact,
and in the event that in expectation of the predetermined temperature T* for the setpoint temperature of the sensor in proper contact this temperature is not attained within a certain tolerance limit, or
in the event that in expectation of the predetermined temperature T** for the setpoint temperature of the sensor not in proper contact this temperature is attained within a certain tolerance limit,
an error signal is output.

## Revendications

1. Procédé destiné à la vérification d'un capteur de température doté d'au moins deux résistances sensibles à la température (R1, R2) qui disposent d'un coefficient négatif ou positif (PTC, NTC) et se trouvent en contact thermique étroit, au moins une résistance série électrique (R3, R4, $R_{Shunt1}$, $R_{Shunt2}$) étant à chaque fois montée en série en amont de chacune des au moins deux résistances sensibles à la température (R1, R2), les au moins deux montages en série de résistances (R1-R3, R2-R4, R1-$R_{Shunt1}$, R2-$R_{Shunt2}$) étant raccordés à la même tension (U) ou étant alimentés à chaque fois par le même courant (I), **caractérisé en ce que** la première résistance sensible à la température (R1) peut être reliée par le biais d'un dispositif de commutation (5) à une résistance série de valeur ohmique élevée (R3) ou à une résistance série de valeur ohmique faible ($R_{Shunt1}$), la première résistance sensible à la température (R1) est reliée, par le biais du dispositif de commutation (5) qui lui est associé, à la résistance série de valeur ohmique faible ($R_{Shunt1}$) tandis que la ou les autres résistances sensibles à la température (R2) restent reliées en série aux résistances série associées R4 de valeur ohmique élevée,
dans le cas d'une première tension U1 ou d'un premier courant I1, la chute de tension est déterminée au niveau des au moins deux résistances sensibles à la température (R1, R2) ou de leurs résistances série ($R_{Shunt1}$, R4) et les températures ($T_{R1,U1}$, $T_{R2,U1}$, $T_{R1,1}$, $T_{R2,1}$) des résistances (R1, R2) ainsi que leur différence $\Delta T_1$, $\Delta T_{U1}$ sont déterminées à partir de celle-ci,
et dans le cas où au moins la différence de température $\Delta T_1$, $\Delta T_{U1}$ dépasse un montant prédéterminé $\Delta T$, un signal d'erreur est émis.

**2.** Procédé destiné à la vérification d'un capteur de température selon la revendication 1, **caractérisé en ce qu'**ensuite, dans le cas d'une seconde tension U2 qui est différente de la première tension U1, ou d'un second courant 12 qui est différent du premier courant I1, la chute de tension est déterminée au niveau des deux résistances sensibles à la température (R1, R2) ou de leurs résistances série ($R_{Shunt1}$, R4) et les températures $T_{R1,U2}$, $T_{R2,U2}$ des résistances sensibles à la température (R1, R2) ainsi que leur différence $\Delta T_{U2}$ sont déterminées à partir de celle-ci, et dans le cas où au moins une des différences de température $\Delta T_{U1}$, $\Delta T_{U2}$ dépasse un montant prédéterminé $\Delta T$, un signal d'erreur est émis.

**3.** Procédé destiné à la vérification d'un capteur de température selon la revendication 1, dans lequel au moins deux résistances sensibles à la température (R1, R2) peuvent être reliées par le biais d'un dispositif de commutation (5, 6) à une résistance série de valeur ohmique élevée (R3, R4) ou à une résistance série de valeur ohmique faible ($R_{Shunt1}$, $R_{Shunt2}$), **caractérisé en ce que** la première résistance sensible à la température (R1) est ensuite séparée, par le biais du dispositif de commutation (5) qui lui est associé, de la résistance série de valeur ohmique faible ($R_{Shunt1}$) et reliée à la résistance série (R3) qui lui est associée, tandis qu'une autre résistance sensible à la température (R2) est reliée, par le biais du dispositif de commutation (6) qui lui est associé, à la résistance série de valeur ohmique faible ($R_{Shunt2}$) qui lui est associée, la chute de tension est déterminée au niveau des au moins deux résistances sensibles à la température (R1, R2) ou de leurs résistances série (R3, $R_{Shunt2}$) et les températures ($T_{R1,2}$, $T_{R2,2}$) des résistances (R1, R2) ainsi que leur différence $\Delta T_2$ sont déterminées à partir de celle-ci, et dans le cas où au moins une des différences de température $\Delta T_1$, $\Delta T_2$ dépasse un montant prédéterminé AT, un signal d'erreur est émis.

**4.** Procédé destiné à la vérification d'un capteur de température selon la revendication 3, **caractérisé en ce que** la mesure des différences de température ($\Delta T_1$, $\Delta T_2$) s'effectue à des tensions différentes (U1, U2).

**5.** Procédé destiné à la vérification d'un capteur de température selon la revendication 3 ou 4, **caractérisé en ce que** les résistances série de valeur ohmique faible ($R_{Shunt1}$, $R_{Shunt2}$) présentent différentes résistances électriques et/ou les résistances série de valeur ohmique élevée (R3, R4) présentent différentes résistances électriques et/ou les résistances sensibles à la température (R1, R2) présentent différentes résistances électriques.

**6.** Procédé destiné à la vérification d'un capteur de température selon l'une quelconque des revendications 1 à 5, **caractérisé en ce qu'**au moins trois résistances sensibles à la température avec des résistances série montées en série en amont sont utilisées et dans le cas où, lors des mesures, au moins deux résistances sensibles à la température fournissent des températures concordantes, tandis qu'au moins une résistance sensible à la température fournit une température qui ne concorde avec aucune autre résistance sensible à la température, le signal de mesure de la résistance sensible à la température qui s'écarte est ignoré et le capteur de température n'est exploité qu'avec les résistances sensibles à la température concordantes.

**7.** Procédé destiné à la vérification d'un capteur de température selon l'une quelconque des revendications 1 à 6, **caractérisé en ce que** pour la vérification du caractère adjacent du capteur de température, une résistance sensible à la température (R1) est reliée, par le biais du dispositif de commutation (5) qui lui est associé, à la résistance série de valeur ohmique faible ($R_{Shunt1}$), la chute de tension est déterminée au niveau de l'au moins une résistance (R1, R2) ou de sa résistance série (R3, R4, $R_{Shunt1}$, $R_{Shunt2}$) et une température T est déterminée à partir de celle-ci, la température déterminée est comparée à une température prédéterminée T* pour la température de consigne en cas de capteur adjacent ou à une température prédéterminée T** pour la température de consigne en cas de capteur non adjacent, et dans le cas où, lorsque l'on s'attend à la température prédéterminée T* pour la température de consigne en cas de capteur adjacent, celle-ci n'est pas atteinte dans le cadre d'une tolérance ou dans le cas où, lorsque l'on s'attend à la température prédéterminée T** pour la température de consigne en cas de capteur non adjacent, celle-ci est atteinte dans le cadre d'une tolérance, un signal d'erreur est émis.

Fig. 1

Fig. 2

Fig. 3

**EP 1 879 005 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2005009924 A
- US 6161958 A
- DE 102004035014 A1
- EP 1413862 A1